# EUROPÄISCHE PATENTSCHRIFT

(11) **EP 2 989 673 B1**
(45) Veröffentlichungstag und Bekanntmachung des Hinweises auf die Patenterteilung: **11.03.2020**
(21) Anmeldenummer: 14724465.1
(22) Anmeldetag: 16.05.2014
(51) Int. Cl.: H01M 8/0444, H01M 8/04858, H01M 8/04992, H01M 8/0432, H01M 8/04537

(54) **BETRIEB VON BRENNSTOFFZELLEN**
OPERATION OF FUEL CELLS
FONCTIONNEMENT DE PILES À COMBUSTIBLE

(30) Priorität: 12.06.2013 DE 102013210948; 09.10.2013 DE 102013220333
(43) Veröffentlichungstag der Anmeldung: 02.03.2016
(73) Patentinhaber: Siemens Aktiengesellschaft, 80333 München (DE)
(72) Erfinder: HOFFMANN, Joachim, 90559 Burgthann (DE); SCHOLZ, Thomas, 23858 Barnitz (DE); WIETOSKA, Jens, 28279 Bremen (DE)
(86) Internationale Anmeldenummer: PCT/EP2014/060108
(87) Internationale Veröffentlichungsnummer: WO 2014/198485

(56) Entgegenhaltungen:
- WO-A1-2008/004564
- WO-A1-2008/082401
- US-A1- 2007 275 276
- US-A1- 2010 136 451

## Beschreibung

Die Erfindung betrifft den Betrieb von Brennstoffzellen.

Bei Brennstoffzellen, gleich welcher Art, resultiert die Alterung der Zellen, bedingt durch die Betriebsweise, häufiges An- und Abfahren, Gasverunreinigungen oder interne Membranprozesse im wesentlichen in einer Veränderung der Strom-Spannung-Kennlinie. Wird diese Veränderung bei der Belastung der Zelle nicht berücksichtigt, wird der Alterungsprozess der Zelle beschleunigt, die Zelle fällt schneller aus oder wird geschädigt. Ähnliches gilt für den Anfahrprozess bei Brennstoffzellen aus dem kalten Zustand. Werden diese beim Anfahren zu stark belastet, fallen sie schneller aus und nehmen Schaden.

Bisher wurden Brennstoffzellen nur mit einer maximalen Stromanstiegscharakteristik oder nur in einem festen Arbeitspunkt betrieben. Für die Festlegung der Parameter musste ein Kompromiss zwischen maximaler Dynamik und dem Schutz der Zelle vor Überlastung gefunden werden. Diese Festlegung führt bei neuen Zellen dazu, dass die mögliche Dynamik der Zellen nicht zwangsläufig ausgenutzt wird, und bei alten oder besonders bei geschädigten Zellen führt dies zu einer Überlastung und damit zu einer schnelleren Alterung und zu einem früheren Ausfall der Zellen. Während des Betriebs konnte eine Schädigung einer Zelle erst durch den Ausfall dieser Zelle erkannt werden. Präventiv konnten von daher bisher keine Maßnahmen ergriffen werden. Ein Beispiel für eine Steuerung bei einer Brennstoffzelle ist aus der US 2010/0136451 A1 bekannt.

Es sind bereits vielfältige Verfahren zum Betrieb von Brennstoffzellen bekannt. Hierbei kann auf folgende Schriften verwiesen werden:
US 2010/0136451 A1, WO 2008/082401 A1, US 2007/275276 A1 und WO 2008/004564 A1.

Der Erfindung liegt die Aufgabe zu Grunde, einen Betrieb von Brennstoffzellen zu ermöglichen, der die oben genannten Probleme zumindest reduziert.

Diese Aufgabe wird gelöst durch ein Verfahren zum Betrieb zumindest einer Brennstoffzelle, wobei Parameter der Brennstoffzelle ermittelt werden, anhand derer eine Belastungskennlinie unter Berücksichtigung des Brennstoffzellentyps der entsprechenden Brennstoffzelle aufgestellt wird, wobei als Parameter zumindest eine Zellleerlaufspannung, eine Zelltemperatur, eine Zelllastspannung und/oder eine Abgaszusammensetzung ermittelt werden, wobei die Leistung von einem Gleichspannungswandler entnommen wird und wobei in Abhängigkeit von einer geforderten Leistung eine Strom-Spannung-Kombination gemäß der Belastungskennlinie gewählt wird.

Die erfindungsgemäße Lösung beruht auf der intelligenten Auswertung verschiedener Zellparameter und der Anpassung der Belastungskennlinie durch eine geeignete Steuerung des Gleichspannungswandlers (auch DC/DC-Wandler genannt) an diese Parameter. Da das Verhalten der verschiedenen Brennstoffzellen und Brennstoffzellentypen sehr unterschiedlich ist, muss die Kennlinie, anhand derer der jeweilige Arbeitspunkt eingestellt wird, auf den jeweiligen Brennstoffzellentyp abgestimmt werden.

Die Werte für die entsprechenden Zellparameter liegen im Normalfall zumindest überwiegend für eine Überwachung der Brennstoffzelle in einer Steuerung bereits vor, wurden aber bislang nicht für eine Anpassung der Belastungskennlinie verwendet. Sollten für die intelligente Auswertung, die beispielsweise modellbasiert oder über neuronale Netze erfolgen kann, Zellparameter erforderlich sein, die im entsprechenden System noch nicht vorliegen, ist es für den Fachmann selbstverständlich, entsprechende Sensoren zur Messung der betreffenden Werte vorzusehen. Die Kommunikation erfolgt aufgrund der Menge der zu übertragenden Parameter vorzugsweise über ein beliebiges Bussystem, kann aber auch (mit entsprechend mehr Aufwand) über jede andere Art der Kommunikation erfolgen.

Durch die Auswertung der Zellparameter, die auch während des Betriebs zu bestimmten Zeitpunkten erfolgen kann, kann der DC/DC-Wandler jederzeit die maximal mögliche Leistung aus der Zelle entnehmen, ohne die Zelle zu schädigen oder die Zelle vorzeitig altern zu lassen (Degradation). Außerdem kann der Gleichspannungswandler schon beim Anfahren der Zelle, wenn diese noch nicht die Betriebstemperatur erreicht hat, immer die für den Anfahrprozess günstigste Strom-Spannung-Kombination aus der Zelle entnehmen und diese dann bis zum Erreichen der Betriebstemperatur weiter anpassen, bis die für die Zelle beste Strom-Spannung-Kombination und damit die maximale Ausgangsleistung erreicht wird.

Kommt es während des Betriebs beispielsweise zu einer Zustandsverschlechterung einer Membrane und damit zu einer Änderung der Zellparameter, kann der DC/DC-Wandler schon während des Betriebs die Strom-Spannungswerte entsprechend anpassen und damit die Zelle vor einer weiteren Schädigung schützen. Auch kann durch das erfindungsgemäße Verfahren die Alterung/Degradation der Zellen während des Betriebes berücksichtigt und die Strom-Spannungskurve dynamisch an diese Zellalterung angepasst werden. Dieses Verfahren der dynamischen Anpassung verlängert somit die Standzeit der Brennstoffzellen erheblich - bei gleichzeitiger Verbesserung des Anfahrvorganges und der Steigerung der Dynamik der Anlage.

In einer vorteilhaften Form der Ausgestaltung wird zumindest ein Parameter während des Betriebes der Zelle zumindest quasi-kontinuierlich ermittelt. Dieses ist mit Ausnahme der Zellleerlaufspannung für alle Parameter möglich, wodurch eine gute zeitliche Auflösung der Überwachung erzielt wird und somit mögliche auftretende Schäden entsprechend zeitnah erkannt werden können. Wenn der Betrieb der Brennstoffzelle unterbrochen werden kann, kann die Zellleerlaufspannung auch in den Betriebspausen gemessen werden. Ob es erforderlich - oder gewünscht - ist, die Zellleerlaufspannung nur zum Anfang des Zellbetriebes oder auch in Abständen zwischendurch zu ermitteln, hängt stark vom Zelltyp, von der Betriebsart der Zelle und dem Aufbau des angeschlossenen Systems ab.

In einer weiteren vorteilhaften Ausführungsform wird die Belastungskennlinie in einer Steuerung für den Gleichspannungswandler hinterlegt. Da jeder Brennstoffzellentyp (PEM: "proton exchange membrane fuel cell", PAFC: "phosphoric acid fuel cell", SOFC: "solid oxide fuel cell", et cetera) eine andere, spezifische Charakteristik hat, die sich zusätzlich noch von Generation zu Generation der Brennstoffzelle ändern kann, können hierbei die Strom-Spannungskennlinien in der jeweiligen Steuerung für den DC/DC-Steller individuell hinterlegt und ggf. bei einem Upgrade der Brennstoffzelle entsprechend angepasst werden.

In einer weiteren vorteilhaften Ausführungsform wird dabei die Belastungskennlinie in Form einer festen Kurve oder in Form von signifikanten Parameterpaaren hinterlegt. Es wird also die Steuerkennlinie für den DC/DC-Steller entweder als feste Kurve (einzelne Werte für jeden Betriebspunkt der Brennstoffzelle) oder in Form von Parameterpaaren, deren Zwischenwerte durch Interpolation von der Steuerung errechnet werden, hinterlegt.

In einer weiteren vorteilhaften Ausführungsform erfolgt eine Anpassung von Steuerparametern des Gleichspannungswandlers über eine Automation eines Brennstoffzellenstapels, der zumindest die zumindest eine Brennstoffzelle umfasst, über eine externe Automation oder über eine interne Elektronik des Gleichspannungswandlers selbst. In diesem Sinne ist mit einer "Steuerung für den Gleichspannungswandler" nicht zwangsläufig eine (integrierte) Steuereinheit des Gleichspannungswandlers gemeint.

Insgesamt ergibt sich durch die erfindungsgemäße Lösung eine geringere Alterung und damit eine verlängerte Standzeit der Brennstoffzelle bei einer dem Zustand der Brennstoffzelle angepassten optimalen Dynamik. Dabei ist insbesondere der Gesichtspunkt der geringeren Ausfallwahrscheinlichkeit für bestimmte Verwendungen der Brennstoffzelle bzw. des Gesamtsystems von besonderer Bedeutung - beispielsweise bei einer Verwendung in U-Booten, wo dieses in längeren Tauchzeiten resultiert.

Zusammenfassend betrifft die Erfindung den Betrieb von Brennstoffzellen. Um Brennstoffzellen in Abhängigkeit ihrer Degradation zu betreiben, wird eine Lösung vorgeschlagen, bei der Parameter der Brennstoffzelle ermittelt werden, anhand derer eine Belastungskennlinie unter Berücksichtigung des Brennstoffzellentyps der entsprechenden Brennstoffzelle aufgestellt wird, wobei als Parameter zumindest eine Zellleerlaufspannung, eine Zelltemperatur, eine Zelllastspannung und/oder eine Abgaszusammensetzung ermittelt werden, wobei die Leistung von einem Gleichspannungswandler entnommen wird und wobei in Abhängigkeit von einer geforderten Leistung eine Strom-Spannung-Kombination gemäß der Belastungskennlinie gewählt wird.

Damit wird ermöglicht, eine Brennstoffzelle immer in ihrem optimalen Betriebsbereich zu betreiben. So kann der Alterungsprozess der Brennstoffzelle verlangsamt und die Lebensdauer und die Verfügbarkeit einer Brennstoffzelle erhöht werden.

## Patentansprüche

1. Verfahren zum Betrieb zumindest einer Brennstoffzelle, wobei Parameter der Brennstoffzelle ermittelt werden, anhand derer eine Belastungskennlinie unter Berücksichtigung des Brennstoffzellentyps der entsprechenden Brennstoffzelle aufgestellt wird, wobei als Parameter zumindest eine Zellleerlaufspannung, eine Zelltemperatur, eine Zelllastspannung und/oder eine Abgaszusammensetzung ermittelt werden, wobei die Leistung von einem Gleichspannungswandler entnommen wird und wobei in Abhängigkeit von einer geforderten Leistung eine Strom-Spannung-Kombination gemäß der Belastungskennlinie gewählt wird, wobei der Gleichspannungswandler beim Anfahren der Brennstoffzelle, wenn diese noch nicht die Betriebstemperatur erreicht hat, immer die für den Anfahrprozess günstigste Strom-Spannung-Kombination aus der Zelle entnimmt und diese dann bis zum Erreichen der Betriebstemperatur weiter anpasst, bis die für die Zelle beste Strom-Spannung-Kombination und damit die maximale Ausgangsleistung erreicht wird, oder die Alterung/Degradation der Brennstoffzelle während des Betriebes berücksichtigt wird und die Strom-Spannungskurve dynamisch an diese Zellalterung angepasst wird,
wobei zumindest ein Parameter während des Betriebes der Zelle zumindest quasi-kontinuierlich ermittelt wird,
wobei die Belastungskennlinie in einer Steuerung für den Gleichspannungswandler hinterlegt wird, wobei der Gleichspannungswandler während des Betriebs die Strom-Spannungswerte entsprechend anpasst und damit die Zelle vor einer weiteren Schädigung schützt, wenn es während des Betriebs zu einer Zustandsverschlechterung einer Membrane und damit zu einer Änderung der Zellparameter kommt.

2. Verfahren nach Anspruch 1,
wobei die Belastungskennlinie in Form einer festen Kurve oder in Form von signifikanten Parameterpaaren hinterlegt wird.

3. Verfahren nach Anspruch 1 oder 2,
wobei eine Anpassung von Steuerparametern des Gleichspannungswandlers über eine Automation eines Brennstoffzellenstapels, der zumindest die zumindest eine Brennstoffzelle umfasst, über eine externe Automation oder über eine interne Elektronik des Gleichspannungswandlers selbst erfolgt.

## Claims

1. Method for operating at least one fuel cell, wherein parameters of the fuel cell are determined, on the basis of which a load characteristic curve is established while taking into account the fuel cell type of the corresponding fuel cell, wherein at least a cell open-circuit voltage, a cell temperature, a cell load voltage and/or an exhaust gas composition are determined as parameters, wherein the power is drawn by a DC-to-DC converter and wherein a current/voltage combination is selected in accordance with the load characteristic curve, depending on the demanded power,
wherein, when starting up the fuel cell, when the cell has not yet reached the operating temperature, the DC-to-DC converter always draws the most favourable current/voltage combination from the cell for the start-up process and then further adapts this combination until the operating temperature is reached, until the optimal current/voltage combination for the cell and thus the maximum power output is reached, or the aging/degradation of the fuel cells during operation is taken into account and the current/voltage curve is dynamically adapted to this cell aging,
wherein at least one parameter is determined at least partially continuously during the operation of the cell,
wherein the load characteristic curve is stored in a controller for the DC-to-DC converter, wherein the DC-to-DC converter adapts the current/voltage values accordingly during operation and thus protects the cell from further damage, if the state of a membrane deteriorates and thus the cell parameters alter during operation.

2. Method according to claim 1,
wherein the load characteristic curve is stored in the form of a fixed curve or in the form of significant parameter pairs.

3. Method according to claim 1 or 2,
wherein control parameters of the DC-to-DC converter are adapted via an automation of a fuel cell stack which at least comprises the at least one fuel cell, via an external automation or via an internal electronic system of the DC-to-DC converter itself.

## Revendications

1. Procédé pour faire fonctionner au moins une pile à combustible, dans lequel on détermine des paramètres de la pile à combustible au moyen desquels on établit une courbe caractéristique de charge en tenant compte du type de la pile à combustible correspondante, dans lequel on détermine, comme paramètres, au moins une tension en circuit ouvert de la pile, une température de la pile, une tension de charge de la pile et/ou une composition des gaz d'échappement, dans lequel on prélève la puissance d'un convertisseur de tension continue et dans lequel on choisit, en fonction d'une puissance exigée, une combinaison courant-tension, conformément à la courbe caractéristique de charge, le convertisseur de tension continue prélevant de la pile, lors du démarrage de la pile à combustible, lorsque celle-ci n'a pas encore atteint la température de fonctionnement, toujours la combinaison courante-tension la plus favorable à l'opération de démarrage et continuant, jusqu'à ce que la température de fonctionnement soit atteinte, à l'adapter jusqu'à atteindre la combinaison courant-tension la meilleure pour la pile et ainsi la puissance de sortie maximum, ou on tient compte du vieillissement/dégradation de la pile à combustible pendant le fonctionnement et on adapte la courbe courant-tension dynamiquement à ce vieillissement de la pile,
dans lequel on détermine, au moins de manière quasi continue, au moins un paramètre pendant le fonctionnement de la pile,
dans lequel on met en mémoire la courbe caractéristique de charge dans une commande du convertisseur de tension continue, le convertisseur de tension continue adaptant de manière adéquate pendant le fonctionnement les valeurs de courant-tension et protégeant ainsi la pile d'un autre endommagement, s'il se produit pendant le fonctionnement une détérioration d'état d'une membrane et ainsi une variation des paramètres de la pile.

2. Procédé suivant la revendication 1,
dans lequel on met en mémoire la courbe caractéristique de charge sous la forme d'une courbe fixe ou sous la forme de paires de paramètres significatifs.

3. Procédé suivant la revendication 1 ou 2,
dans lequel une adaptation de paramètres de commande du convertisseur de tension continue se produit par une automatisation de l'empilement de piles à combustible, qui comprend au moins la au moins une pile à combustible, par une automatisation extérieure ou par une électronique interne du convertisseur de tension continue soi-même.
